# EUROPÄISCHE PATENTSCHRIFT

(11) **EP 2 144 831 B1**
(45) Veröffentlichungstag und Bekanntmachung des Hinweises auf die Patenterteilung: **29.02.2012**
(21) Anmeldenummer: 08758520.4
(22) Anmeldetag: 14.05.2008
(51) Int. Cl.: B65G 57/03, B65G 59/02, B65G 60/00

(54) **VERFAHREN ZUM BE- UND ENTLADEN EINER PALETTE UND ENTSPRECHENDER PALETTIERER**
METHOD FOR LOADING AND UNLOADING A PALLET AND CORRESPONDING PALLETIZER
PROCÉDÉ POUR CHARGER ET DÉCHARGER UNE PALETTE ET PALETTISEUSE CORRESPONDANTE

(30) Priorität: 14.05.2007 DE 102007022908
(43) Veröffentlichungstag der Anmeldung: 20.01.2010
(73) Patentinhaber: Krones AG, 93073 Neutraubling (DE)
(72) Erfinder: PERL, Kurt, 83253 Rimsting (DE)
(74) Vertreter: Grünecker, Kinkeldey, Stockmair & Schwanhäusser
(86) Internationale Anmeldenummer: PCT/EP2008/003875
(87) Internationale Veröffentlichungsnummer: WO 2008/138607

(56) Entgegenhaltungen:
- EP-A- 1 321 396
- DE-A1- 4 414 001

## Beschreibung

Die Erfindung betrifft ein Verfahren zum Beladen bzw. Entladen einer Palette, sowie einen Palettierer gemäß dem Oberbegriff des Anspruchs 7.

Solche Palettierer sind bekannt. Bei solch einem Palettierer wird zum Beladen einer Palette eine leere Palette in einer Ladestation bereitgestellt. Auf diese werden lagenweise Gebinde, beispielsweise Flaschenkästen, Einweggebinde oder dergleichen, abgelegt. Dazu werden die Gebinde von einer Gebindebereitstellungsstation mit einem Greifkopf auf die leere oder schon teilweise bestückte Palette gehoben. Zum Transport der Gebinde wird beispielsweise eine Drehsäule mit einem oder zwei höhenverstellbaren Greifköpfen benutzt. Zum Entladen läuft das beschriebene Verfahren in umgekehrter Reihenfolge ab. Insbesondere beim Einsatz von zwei Greifköpfen kann ein relativ hoher Durchsatz erzielt werden.

Bei den bekannten Be- bzw. Entladeverfahren und den bekannten Palettierem ergibt sich trotz optimierter Be- und Entladung der Gebinde beim Einsatz von zwei Greifköpfen, das Problem, dass sich, sobald eine Palette vollständig beladen bzw. vollständig entladen ist, beim Wechsel der Palette, also der Bereitstellung einer neuen Leerpalette bzw. einer neuen vollständig bepackten Palette, Todzeiten ergeben, in denen die Gebindebereitsteilungsstation keine Gebinde aufsetzten bzw. abnehmen kann und folglich zwangsweise ruht.

Die DE 44 14 001 (D1) betrifft eine Palettiermaschine zum Be- oder Entladen von Paletten mit einer Greifeinrichtung zum Erfassen und Überführen der Behälter, wobei die Greifeinrichtung mit gleichbleibendem Umlaufsinn auf einer geschlossenen Bahn geführt wird. Wie man anhand der Figuren 1 und 3 sowie der Beschreibung in Spalte 3, Zeilen 40 bis 65 erkennen kann, offenbart die D1 das Bereitstellen einer zweiten Palette oberhalb einer ersten Palette.

Die D1 offenbart jedoch nicht, dass nach dem Entfernen der bepackten ersten Palette die zweite Palette vollständig auf die erste Ebene abgesenkt wird. Auf Grund der festgelegten Bahnkurve in der D1 ist es in der D1 nicht möglich, die zweite Palette vollständig abzusenken, da der Greifarm der D1 die Gebinde immer am gleichen Ort absetzt.

Durch das vollständige Absenken der zweiten Palette nach dem Entfernen der bepackten ersten Palette erlaubt das Verfahren nach Anspruch 1 bzw. 4 ein konstruktiv vereinfachtes Verfahren gegenüber der Lehre der D1.

Diese Aufgabe wird mit dem Verfahren zum Beladen einer Palette nach Anspruch 1, dem Verfahren zum Entladen einer Palette nach Anspruch 4 und dem Palettierer nach Anspruch 7 gelöst.

Beim erfindungsgemäßen Verfahren zum Beladen einer Palette nach Anspruch 1 können die Todzeiten beim Wechsel von Paletten, also beim Entfernen der bepackten ersten Palette und dem Bereitstellen einer zweiten, insbesondere leeren Palette, dadurch reduziert werden, dass die zweite Palette in einer Ebene oberhalb der Oberseite der bepackten ersten Palette bereitgestellt wird. Dadurch wird im Beladeprozess die Bereitstellung einer neuen Palette vom Aufsetzen so getrennt, dass schon früher als im Stand der Technik mit dem Beladen der zweiten Palette begonnen werden kann, und dies selbst dann, wenn die erste, schon vollständig bepackte Palette noch nicht oder erst teilweise abtransportiert wurde bzw. werden konnte. Folglich kann der Durchsatz beim Beladen erhöht werden.

In einer bevorzugten Ausführungsform können Gebinde schon auf die zweite Palette aufgesetzt werden, solang sich die zweite Palette noch oberhalb der ersten Palette befindet. Dabei kann sich die zweite Palette durchaus auch noch auf der zweiten Ebene befinden. Folglich wird hierdurch, wie oben schon dargelegt, eine weitere Optimierung des Durchsatzes erzielt. Insbesondere kann mit dem Beladen der zweiten Palette schon ohne Verzögerung angefangen werden, wenn die zuvor bepackte erste Palette aus prozesstechnischen Gründen noch nicht abtransportiert werden konnte.

Vorteilhafterweise kann nach dem Entfernen der bepackten ersten Palette, die zweite Palette schrittweise oder gleich vollständig auf die zum Abtransport einer bepackten Palette vorgesehene erste Ebene abgesenkt werden. Hierdurch kann der Durchsatz beim Beladen weiter optimiert werden. Ein schrittweises Absenken ist insbesondere dann von Vorteil, wenn die Bereitstellung einer neuen Gebindelage schneller realisiert werden kann als das Absenken der zweiten Palette. Steht also eine neue Lage zum Absetzen bereit, hält man die zweite Palette beim Absenken in der passenden Höhe an und setzt die neue Lage auf der zweiten Palette ab. Während die nächste Lage geholt wird, wird dann zwischenzeitlich die zweite Palette weiter abgesenkt. Ist dagegen der Absenkvorgang schneller realisierbar als die Bereitstellung einer neuen Lage, kann man die zweite Palette sofort auf die erste Ebene absenken, da dies dann keinen reduzierenden Einfluss auf den Durchsatz hat.

Gemäß einer bevorzugten Ausführungsform kann vor dem Aufsetzen einer vorbestimmten Anzahl an Lagen, insbesondere vor der zweiten, der dritten oder der vierten Gebindelage, auf die zweite Palette, die zweite Palette auf die erste Ebene abgesenkt werden. Hierdurch können wegen der begrenzten Traglast die mechanischen Anforderungen an die Vorrichtung, welche die zweite Palette auf die zweiten Ebene bzw. generell oberhalb der ersten Ebene hält, gering gehalten werden, um somit die Realisierung des Verfahrens gemäß der Erfindung auch wirtschaftlich interessant zu machen.

Das Verfahren zum Entladen einer Palette gemäß Anspruch 4, greift die erfinderische Idee der Bereitstellung einer neuen, hier allerdings bepackten zweiten Palette, unterhalb der zumindest schon teilweise entladenen oder leeren, ersten Palette auf. Auch beim Entladen kann somit die Todzeit beim Palettenwechsel verringert werden, da auch hier durch die zeitliche Überlappung der Bereitstellung der zweiten Palette und dem vollständigen Entladen der ersten Palette bzw. dem Entfemen der leeren Palette, die zweite Palette schneller, d. h. früher bereitgestellt werden kann, weil die erste Palette schon vor dem vollständigen Entladen und Nachführen der nächsten Palette nach oben angehoben wird.

Gemäß einer bevorzugten Ausführungsform können noch Gebinde von der ersten Palette entfernt werden, wenn die zweite Palette schon unterhalb der ersten Palette bereit gestellt wird, z. B. durch seitliches Einfahren. Insbesondere können Gebinde von der ersten Palette noch entfernt werden, wenn die bepackte zweite Palette aus prozesstechnischen Gründen schon darunter fluchtend bereitsteht. Nach dem Entladen der ersten Palette kann dann ohne Pause unmittelbar mit dem Entladen der zweiten Palette begonnen werden.

Vorteilhafterweise kann vor dem Bereitstellen der zweiten bepackten Palette die erste Palette schrittweise oder vollständig auf die erste, zum Entladen dienende Ebene angehoben werden, die oberhalb der Palettenstapelhöhe liegt. Ein schrittweises Anheben ist, ähnlich wie oben beim Absenken, insbesondere dann von Vorteil, wenn das Entfemen einer neuen Gebindelage schneller realisiert werden kann als das Anheben der zu entladenden ersten Palette. Steht ein Greifkopf zum Entfemen einer Gebindelage bereit, hält die erste Palette beim Anheben an und die oberste Gebindelage wird entfernt. Während die entfernte Gebindelage am vorbestimmten Ort abgesetzt wird, kann die erste Palette weiter in Richtung der ersten Ebene angehoben werden. Wird der Anhebvorgang schneller realisiert als die Bereitstellung des Greifkopfs zum Entfernen, kann man die erste Palette sofort auf die erste Ebene anheben, da dies dann keinen Einfluss auf den Durchsatz hat.

Bevorzugt kann die erste Palette auf die erste Ebene angehoben werden, sobald nur noch eine vorbestimmte Höchstanzahl, insbesondere eine, zwei oder drei Gebindelagen auf der ersten Palette vorhanden sind. Folglich können, wie oben beim Beladen, die mechanischen Anforderungen an die Vorrichtung, welche die erste Palette auf die erste Ebene bzw. generell oberhalb der zweiten Ebene hält bzw. anhebt, gering gehalten werden, um somit die Realisierung des Verfahrens gemäß der Erfindung wirtschaftlich interessant zu machen.

Die Erfindung betrifft weiterhin einen Palettierer gemäß Anspruch 7. Wie beim erfindungsgemäßen Verfahren realisiert auch der erfindungsgemäße Palettierer die Reduzierung der Todzeit zum Heranführen bzw. Wegführen einer bepackten Palette, indem über einen gewissen Zeitraum die bepackte Palette in der Ladestation in einer Ebene unterhalb einer leeren oder nur teilweise bepackten Palette angeordnet ist. Unter Ladestation versteht man hierbei den Bereich des Palettierers, in dem auf eine bereitgestellte leere oder teilweise bepackte Palette Gebinde, insbesondere lagenweise, aufgesetzt oder abgenommen werden. Unter Palettenbereitstellungsstation versteht man den Bereich des Palettierers, der die leeren Paletten einzeln oder stapelweise bereitstellt oder aufnimmt, die dann zur Ladestation gebracht oder von dieser gebracht werden. Bei den Gebinden kann es sich um jegliche Produktarten handeln. Besonders vorteilhaft kann der Palettierer jedoch für Flaschenkästen, Einweggebinde oder dergleichen eingesetzt werden, vorzugsweise für in Folie oder Karton eingeschlagene Flaschen.

Bevorzugt kann die Palettenbereitstellungsstation einen höhenverfahrbaren Ausleger zum Transportieren einer Palette von der Palettenbereitstellungsstation zur Ladestation oder umgekehrt aufweisen. Dieser Ausleger dient einmal zum Transport der Palette von der Palettenbereitstellungsstation zur Ladestation sowie umgekehrt und gleichzeitig zum Halten einer Palette oberhalb einer bepackten Palette. Somit kann die erfinderische Palettiervorrichtung einfach realisiert werden.

Gemäß einer bevorzugten Ausführungsform kann der Ausleger, neben der Höhenverfahrbarkeit, zumindest in der horizontalen Ebene, also senkrecht zur Höhenverstellbarkeit, zusätzlich schwenkbar und/oder translatorisch bewegbar ausgebildet sein. Mit einem so ausgelegten Ausleger lassen sich die Vorteile der Erfindung ohne großen technischen Aufwand realisieren.

Vorteilhafterweise kann der Ausleger weiterhin so dimensioniert sein, dass er höchstens eine Palette ggf. zusammen mit einer vorbestimmten Anzahl, insbesondere eine oder zwei oder drei Gebindelagen tragen kann. Somit sind die mechanischen Anforderungen an den Ausleger relativ gering, so dass er in technisch einfacher Bauweise realisiert werden kann, ohne dass die Vorteile der reduzierten Todzeit dadurch beeinträchtigt werden. Es hat sich gezeigt, dass es bei den bekannten Belade- und Entladevorgängen ausreichend ist, wenn der Ausleger für eine, zwei oder drei Gebindelagen dimensioniert ist, da der Zeitraum von der Bereitstellung der zweiten Palette bis zum Absetzen bzw. Abnehmen der ersten, zweiten oder dritten Gebindelage ausreichend groß ist, um die darunter befindliche Palette abtransportieren zu können bzw. im Falle des Entladens bereitstellen zu können. Eine statisch stärkere Ausführung des Auslegers ist somit vermeidbar.

Gemäß einer Variante kann der Palettierer zusätzlich eine Gebindebereitstellungsstation mit mindestens einem zweiten höhenverstellbaren Ausleger zum Bereitstellen der Gebinde auf der Palette aufweisen. Durch die Synchronisierung der Gebindebereitstellungsstation mit der Palettenbereitstellungsstation wird der Durchsatz des Palettierers weiter verbessert. Vorteilhafterweise kann der Palettierer dabei so ausgebildet sein, dass die beiden Paletten übereinander angeordnet sind. Dann kann die Gebindebereitstellungsstation, bis auf eine Höhenanpassung, unterbrechungsfrei kontinuierlich weiterarbeiten.

Die Erfindung betrifft weiterhin einen Palettierer zum Durchführen eines der oben beschriebenen Verfahren.

Nachfolgend wird anhand eines Ausführungsbeispiels die Erfindung unter Bezugnahme auf die Zeichnungen im Detail beschrieben. Es zeigen:
Figur 1 perspektivisch eine Ausführungsform eines erfindungsgemäßen Palettierers.
die Figuren 2a bis 2e schematisch eine erste Ausführungsform gemäß der Erfindung zum Beladen einer Palette, und
die Figuren 3a bis 3e schematisch eine zweite Ausführungsform gemäß der Erfindung zum Entladen einer Palette.

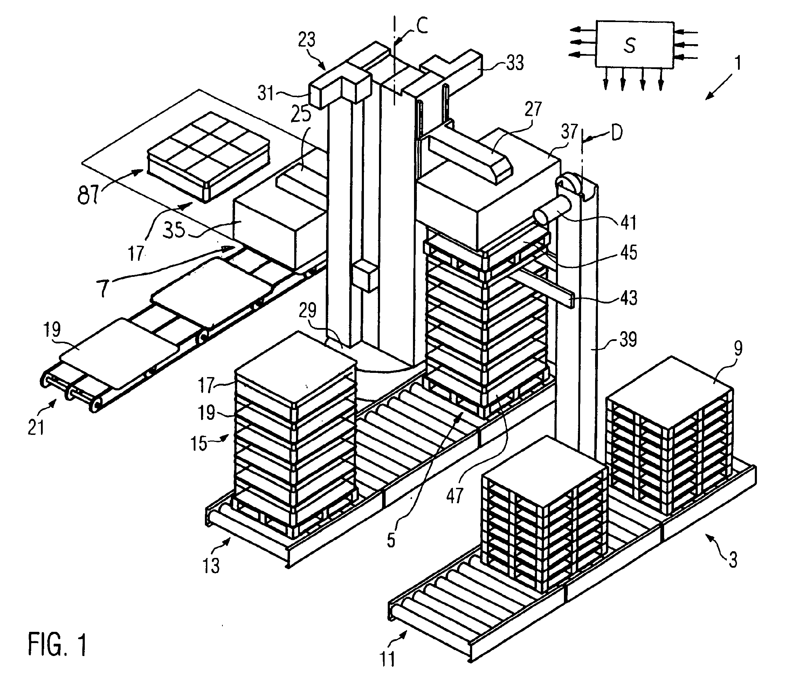

Die Figur 1 zeigt perspektivisch eine Ausführungsform des erfindungsgemäßen Palettieres. Der Palettierer 1 umfasst eine Palettenbereitstellungsstation 3, eine Ladestation 5 und eine Gebindebereitstellungsstation 7 mit einem zugeordneten Gebindelagenförderer 87. Die Palettenbereitstellungsstation 3 dient dazu, Leerpaletten 9, die in dieser Ausführungsform übereinander gestapelt sind, bereitzustellen. Die Leerpaletten 9 werden hier über einen Förderer 11 stapelweise angeliefert oder abtransportiert, alternativ können sie auch einfach an geeigneter Stelle abgesetzt oder angeliefert werden, z. B. per Hubwagen oder Gabelstapler. Auch der Ladestation 5 ist ein Transportband 13 zugeordnet, auf dem vollständig bepackte Paletten 15 wegtransportiert werden können, wenn der Palettierer 1 zum Beladen benutzt wird, bzw. herantransportiert werden können, wenn der Palettierer 1 zum Entladen benutzt wird. Alle zuvor genannten Stationen 3, 5, 7 sowie Förderer bzw. Transporteure 11, 13, 21 und 87 sind bodennah im Wesentlichen in einer Ebene A angeordnet.

Auf einer vollständig bepackten Palette 15 sind in dieser Ausführungsform sechs Lagen angeordnet, es können jedoch je nach Produkt auch mehr oder weniger Lagen sein. Hier umfasst eine Lage mehrere Gebinde, insbesondere Einweggebinde oder dergleichen. Zwischen den einzelnen Lagen können eventuell Zwischenlagen 19 aus Karton oder Kunststoff zur Lagestabilisierung angeordnet werden.

Die Gebindebereitstellungsstation 7 umfasst ferner ein Transportband 21, über das die Zwischenlagen 19 einzeln bereitgestellt werden. Weiterhin (hier nicht gezeigt) umfasst eine Gebindebereitstellungsstation üblicherweise auch noch ein Mittel zum Ausrichten und Zentrieren der Gebinde in einer Lage, wenn der Palettierer 1 zum Beladen benutzt wird.

Der Gebindebereitstellungsstation 7 und der Ladestation 5 zugeordnet ist eine vertikale Drehsäule 23 an der zwei unabhängig voneinander entlang lotrechter Führungen höhenverfahrbare Ausleger 25 und 27 angeordnet sind. Die Drehsäule 23 kann sich um ihre vertikale Achse C auf einem Rundtisch 29 programmgesteuert drehen bzw. schwenken. Die Ausleger 25 und 27 werden von ebenfalls programmgesteuerten Hubmotoren 31, 33 angetrieben. Die Ausleger 25 und 27 tragen jeweils einen aus dem Stand der Technik (DE 29 45 883 A1, DE 34 09 964 A1) bekannten Rollenteppichkopf bzw. Jalousiekopf 35, 37, mit dem eine Gebindelage 17 vom Gebindelagenförderer 87 der Gebindebereitstellungsstation 7 beim Beladen einer Palette 9 aufgenommen werden kann. Beim Beladen wird dann der Ausleger 25 mit dem Hubmotor 31 angehoben und nach 180°- Drehung der Drehsäule 23 wird die vom Rollenteppichkopf 35 aufgenommene Gebindelage auf einer in der Ladestation 5 bereitstehenden Palette 45, 47, abgesetzt. Die beschriebene Situation entspricht in Figur 1 der Anordnung des zweiten Rollenteppichkopfes 37. Anstatt eines besonders für empfindliche Einweggebinde vorteilhaften Rollenteppichkopfes können auch andere Greifköpfe zum Einsatz kommen, wenn dies für die zu handhabende Gebindeart zweckmäßig ist.

Der Palettenbereitstellungsstation 3 zugeordnet ist eine zweite lotrecht angeordnete Drehsäule 39, die ebenfalls einen, mit Hilfe eines weiteren programmgesteuerten Hubmotors 41 höhenverstellbaren Ausleger 43 umfasst und zwischen dem parallel verlaufenden Förderer 11 und 13 angeordnet ist. Erfindungsgemäß ist dieser Ausleger 43, so ausgebildet, dass er eine leere Palette 45 vom Palettenstapel 9 aufnehmen und nach 180°-Drehung der Drehsäule 39 um ihre lotrechte Drehachse D, die mit Abstand parallel zur Drehachse C ausgerichtet ist, oberhalb einer bepackten Palette 47 in der Ladestation 5 bereithalten kann. Insbesondere wird die leere Palette 45 so oberhalb der schon vollständig beladenen Palette 47 angeordnet, dass die beiden Paletten 45 und 47 zumindest teilweise übereinander liegen bzw. fluchten. Die Rollenteppich- bzw. Jalousieköpfe 35 und 37 besitzen an ihrer Unterseite steuerbare Greifwerkzeuge, vorzugsweise Saugnäpfe, zum Erfassen der Zwischenlagen 19.

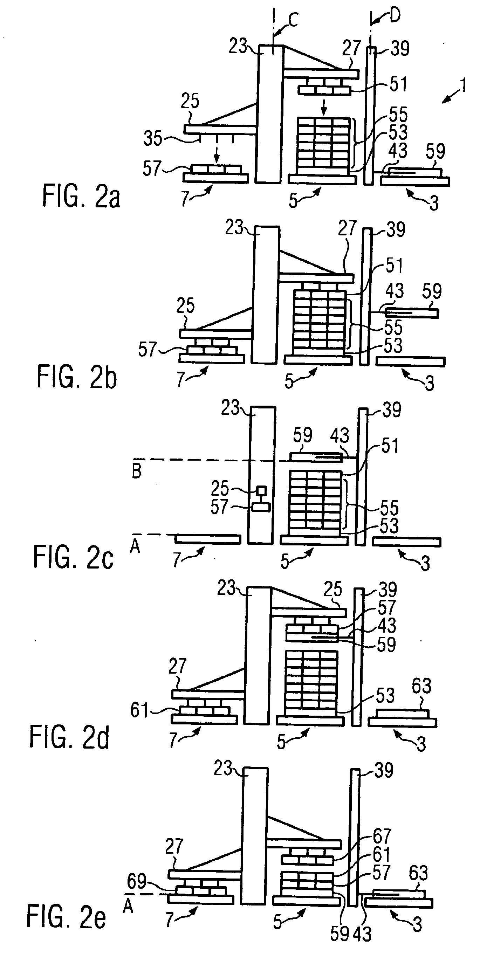

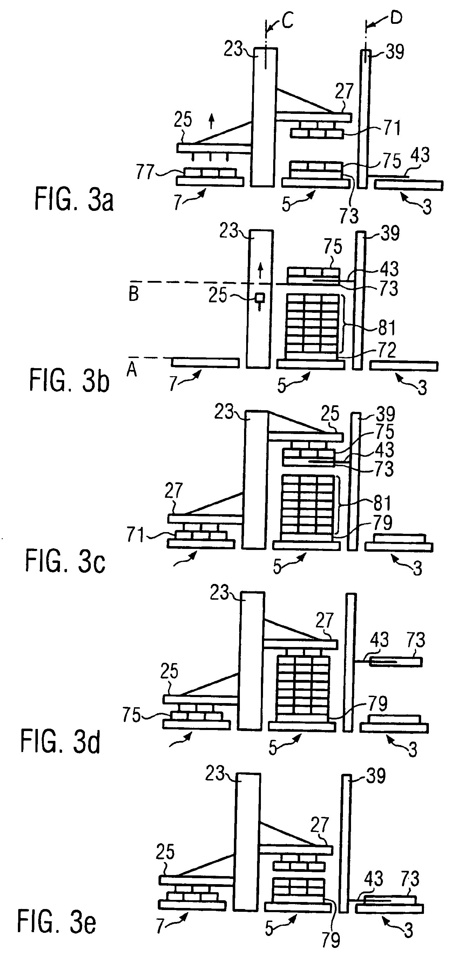

Mit dem Palettierer 1 gemäß der Erfindung wird im Vergleich zu bekannten Palettierern der folgende Vorteil erzielt: da zumindest zeitweise eine zweite Palette 45 in einer Ebene oberhalb einer ersten bepackten Palette 47 bereitgestellt werden kann, können beim Bepacken bzw. Entladen von Paletten (dies wird im Zusammenhang mit den Figuren 2 und 3 noch näher beschrieben) Todzeiten verhindert werden, die im Stand der Technik immer dann auftreten, wenn eine vollständig bepackte Palette abtransportiert werden muss bzw. beim Entladen eine vollständig bepackte Palette heran transportiert werden muss. Dadurch ist nun ein kontinuierlicher Gebindezufluss möglich. Wie in Figur 1 dargestellt, ist der erfindungsgemäße Palettierer 1 nämlich so ausgelegt, dass die erste Drehsäule 23 selbst dann weiterhin Gebindelagen 17 in der Ladestation 5 bereit stellen kann, wenn eine erste Palette 47 schon vollständig bepackt ist ist, da dank der oberhalb der ersten Palette 47 bereitgestellten zweiten Palette 45 schon mit dem Bepacken dieser zweiten Palette 45 begonnen werden kann. Sobald die bepackte Palette 47 entfernt worden ist, kann dann die neu zu beladende Palette 45 bis auf das Transportband 13 abgesenkt werden. Dieses Absenken kann auf einmal erfolgen oder schrittweise.

Beim Entladen ergeben sich ähnliche Vorteile, da auch hier bei einem Palettenwechsel bei der Gebindebereitstellung keine Todzeiten auftreten müssen. In diesem Falle stellt die Palette 45 die zu entladene Palette dar, von der der Rollenteppichkopf 37 soeben die letzte Lage 17 abhebt, während gleichzeitig unterhalb der Palette 45 schon eine neue, vollständig bepackte Palette 47 bereitgestellt werden kann, die dann als nächstes Entladen wird. Somit muss auch hier die Gebindebereitstellungsstation 7 nicht auf eine neue Palette warten, sondern kann ohne Pause weiterarbeiten.

Um genügend Zeit zum Abtransport von bepackten Paletten bzw. zum Herantransport von zu entladenden Paletten zu gewährleisten, ist die Drehsäule 39 und der Ausleger 43 so dimensioniert, dass sich auf der Palette 45 noch ein oder zwei oder drei Gebindelagen befinden können. Da dies für die meisten Anwendungen ausreichend ist, braucht die Drehsäule 39 und der Ausleger 43 auch nur für diese reduzierten mechanischen Belastungen ausgebildet sein. Entsprechend einfach und filigran können die Drehsäule 39 und der Ausleger 43 ausgebildet sein.

Gemäß einer Variante kann sowohl in der Palettenbereitstellungsstation 3 als auch in der Gebindebereitstellungsstation 7 anstatt einer Drehsäule 23, 39 mit höhenverstellbarem Ausleger 25, 27, 43 auch mit fester Säule mit höhenverstellbarem Schwenkarm oder eine feste Säule mit höhenverstellbarer Linearachse benutzt werden um die Paletten bzw. Gebinde bereitstellen bzw. entfernen zu können.

Ebenso ist die Gebindebereitstellungsstation 7 des erfindungsgemäßen Palettierers nicht auf die Ausführungsform beschränkt. So können die Gebindelagen durch nicht näher dargestellte Einschubvorrichtungen in die Rollenteppichköpfe ein- oder ausgeschoben sowie zentriert werden.

Weiterhin lässt sich das erfindungsgemäße Konzept, nachdem sich eine zweite Palette eine Zeit lang oberhalb einer bepackten ersten Palette befindet, auch in Palettierem mit mehr als einer Ladestation realisieren.

Ferner werden bei dem Palettierer 1 dieser Ausführungsform die Gebinde der Gebindelagen 17 vom Ausleger 25, 27 entweder auf die Palette 47 oder auf die Palette 45 abgesenkt bzw. beim Entladen von diesen abgehoben. Alternativ ist es jedoch auch möglich, die Gebinde in nur einer Ebene zu bewegen und entsprechend nach Auflegen/Entfernen einer Gebindelage 17 die Palette mit den sich darauf befindlichen Gebindelagen abzusenken/hochzuheben. Auch in solch einer Ausführungsform ist es erfindungsgemäß möglich, die Palettenbereitstellungsstation so auszubilden, dass zumindest eine Zeit lang eine zweite Palette oberhalb einer ersten bepackten Palette angeordnet ist, so dass keine Todzeiten beim Ab- bzw. Herantransport der bepackten Palette entsteht.

Nachfolgend werden anhand der Figuren 2a bis 2e und 3a bis 3e Ausführungsformen des erfindungsgemäßen Verfahrens zum Be- und Entladen von Paletten näher erläutert. Dies stellt gleichzeitig die detaillierte Beschreibung der Funktionsweise des in Figur 1 dargestellten und erläuterten Palettierers 1 dar. Dementsprechend werden in den Figuren 2a bis 2e und 3a bis 3e für Bauelemente, die schon im Zusammenhang mit der Ausführungsform des erfindungsgemäßen Palettierers, der in Figur 1 dargestellt wurde, benutzt wurden, wieder verwendet und auf eine entsprechende detaillierte Beschreibung dieser Bauelemente und deren Merkmale wird auf das Vorherstehende verwiesen.

Die Figur 2a zeigt schematisch und beispielhaft den Palettierer 1 in einer Seitenansicht. Rechts erkennt man die Palettenbereitstellungsstation 3, in der Mitte die Ladestation 5, dazwischen die Drehsäule 39 und auf der linken Seite die links neben der Drehsäule 23 angeordnete Gebindebereitstellungsstation 7. In dem gezeigten Zustand wird in der Ladestation 5 vom Ausleger 27 eine letzte Lage Gebinde 51, beispielsweise eine Lage Flaschenkästen, Einweggebinde oder dergleichen, auf eine Palette 53, auf der schon eine bestimmte Anzahl (hier sechs) Gebindelagen 55 aufgesetzt worden sind, bereitgestellt und zusammen mit einer nicht gezeigten Zwischenlage 19 in Richtung der Palette 53 abwärts bewegt.

Der zweite Ausleger 25 an der Drehsäule 23 wird auch zeitgleich abgesenkt, um mit seinem Rollenteppichkopf 35 eine weitere Gebindelage 57 aufnehmen zu können. Die Gebinde müssen dabei nicht vom gleichen Typ wie in der Gebindelage 51 sein. In nicht näher gezeigter Weise nimmt der Rollenteppichkopf 35 mit an seiner Unterseite angeordneten steuerbaren Vakuumsaugnäpfen eine vom Transportband 21 seitlich in die Gebindebereitstellungsstation 7 geförderte Zwischenlage 19 auf, während die Gebindelage 57 darüber in den Rollenteppichkopf eingeschoben wird.

In der Palettenbereitstellungsstation 3 nimmt währenddessen der Ausleger 43 der Drehsäule 39 eine leere Palette 59 auf.

Im in Figur 2b gezeigten Zustand wurde die leere Palette 59 vom Ausleger 43 angehoben. Gleichzeitig hat der Ausleger 27 im Bereich Ladestation 5 die Gebindelage 51 auf der Oberseite der ersten Palette 53 mit den übrigen Gebindelagen 55 abgelegt. Der zweite Ausleger 25 hat seinerseits die neue Gebindelage 57 in der Gebindebereitstellungsstation 7 aufgenommen.

Figur 2c zeigt nun den Zustand, in dem erfindungsgemäß in der Ladestation 5 die zweite leere Palette 59 oberhalb der bepackten Palette - gebildet aus Palette 53, den Gebindelagen 55 und der letzten aufgesetzten Gebindelage 51 - bereitgestellt wird. Hierzu wurde die Drehsäule 39 zuvor um 180° geschwenkt. Auf Seiten der Gebindebereitstellungsstation 7 wurde die Drehsäule 23 schon um annähernd 90° gedreht und man erkennt schematisch den zweiten Ausleger 25 der sich mit der neuen Gebindelage 57 nach oben bewegt. Gleichzeitig wird auf der gegenüberliegenden Seite (nicht zu sehen) der in die Gegenrichtung drehende zweite Ausleger 27 nach unten bewegt.

Folglich befindet sich erfindungsgemäß die erste Palette 53 auf einer ersten Ebene A, während sich in diesem Zustand die zweite Palette 59 in einer zweiten Ebene B oberhalb der bepackten Palette befindet. In dieser Ausführungsform liegen die beiden Paletten fluchtend übereinander.

Figur 2d zeigt nun den Zustand, in dem vom Ausleger 25 bei der Ladestation 5 die um 180° gedrehte neue Gebindelage 57 mit der darunter mitgeführten Zwischenlage 19 (nicht gezeigt) auf die zweite Palette 59, die sich immer noch oberhalb der bepackten ersten Palette 53 befindet, aufgesetzt und nachfolgend freigegeben wurde. Gleichzeitig nimmt der Ausleger 27 eine weitere neue Gebindelage 61 an der Gebindebereitstellungsstation 7 auf. In der Palettenbereitstellungsstation 3 wird ebenso eine neue Leerpalette 63 bereitgestellt. Alternativ, wie in Figur 1 gezeigt, kann die neue Leerpalette auch von einem Palettenstapel genommen werden.

In Figur 2e wird nun der Zustand gezeigt, in dem die zuvor vollständig bepackte erste Palette 53 mit den Gebindelagen 55 und 51 bereits abtransportiert wurde. Nach dem Abtransport wurde die teilweise schon beladene Palette 59 auf die erste Ebene A der Ladestation 5 abgesenkt, wobei schon ohne Verzögerung über die Gebindebereitstellungsstation 7 weitere Lagen 61, 67 herangeführt und von den Auflegern 25 und 27 im Wechselspiel auf die zweite Palette 59 abgelegt werden konnten. Gleichzeitig nimmt der Ausleger 43 die neue Palette 63 an der Palettenbereitstellungsstation 3 auf und der Träger 27 eine weitere Gebindelage 69 an der Gebindebereitstellungsstation 7.

Wie sich aus den Figuren 2d und 2e ergibt, hat das erfindungsgemäße Verfahren den Vorteil, dass die Gebindebereitstellungsstation 7 mit der Drehsäule 23 und den beiden Auslegern 25, 27 unabhängig davon, ob die vollständig bepackte Palette 53 schon abtransportiert wurde oder nicht, ohne Pause weiterarbeiten kann, da auf die neu bereitgestellte zweite Palette 59 ohne Verzögerung neue Gebindelagen, hier die Lagen 57, 61, abgesetzt werden konnten. Im Gegensatz dazu würden bei einem Palettierer, der aus dem Stand der Technik bekannt ist, im Zustand, der in Figur 2e gezeigt ist, die Gebindelagen 57, 61 noch nicht auf der zweiten Palette 59 liegen können.

Da üblicherweise der Abtransport der vollständig bepackten Palette zeitnah geschieht, ist es, wie oben im Zusammenhang mit dem Palettierer 1 schon erwähnt, ausreichend den Ausleger 43 so auszubilden, dass er maximal eine, zwei oder drei Gebindelagen einschließlich der zweiten Palette 59 tragen können muss.

Das zwischen dem Zustand, der in der Figur 2d gezeigt wird, und dem Zustand, der in der Figur 2e gezeigt wird, durchgeführte Absenken der zweiten Palette 59 durch den höhenverstellbaren Ausleger 43 erfolgt entweder schrittweise, insbesondere dann, wenn über die Gebindebereitstellungsstation 7 beim Absenken eine neue Gebindelage abgesetzt werden kann, oder vollständig in einem Schritt, insbesondere dann, wenn beim Absenken keine neue Gebindelage zum Aufsetzen bereitsteht.

Die Figuren 3a bis 3e illustrieren eine Ausführungsform des erfindungsgemäßen Verfahrens zum Entladen einer Palette. Das Verfahren wird ebenso wie die in den Figuren 2a bis 2e dargestellte Ausführungsform des Verfahrens zum Beladen einer Palette anhand einer schematischen Seitenansicht, der in Figur 1 dargestellten Ausführungsform des erfindungsgemäßen Palettierers 1 beschrieben. Bauelemente mit Bezugszeichen, die schon in vorangegangenen Figuren benutzt wurden, werden nicht mehr im Detail beschrieben, auf deren Beschreibung wird hiermit nach oben verwiesen.

Figur 3a zeigt den Zustand, in dem eine Gebindelage 71 vom Ausleger 27 der Gebindebereitstellungsstation 7 von einer Palette 73 entfernt wird. Wie in Figur 3a zu erkennen, befindet sich nach dem Anheben der Gebindelage 71 noch eine weitere Gebindelage 75 auf der ersten Palette 73. Der zweite Ausleger 25 der Gebindebereitstellungsstation 7 hat gerade eine Gebindelage 77 abgesetzt und bewegt sich wieder nach oben. Der Ausleger 43 der Palettenbereitstellungsstation 3 kommt in diesem Zustand noch nicht zum Einsatz.

Der in der Figur 3b gezeigte Zustand zeigt nun wie sich erfindungsgemäß die erste Palette 73 mit einer noch verbliebenen Gebindelage 75 oberhalb einer neu bereitgestellten zweiten, vollständig bepackten Palette 79 mit sieben Gebindelagen 81 befindet. Die erste Palette 73 wurde dabei vorher vom Ausleger 43 aus der Ebene A nach oben in die Ebene B angehoben. Gleichzeitig bewegt sich der Ausleger 25 weiter nach oben, wobei die Drehsäule 23 schon um annähernd 90° gedreht wurde. Der zweite Ausleger 27 mit der abgehobenen Gebindelage 71 befindet sich auf der Rückseite der Drehsäule 23 in Abwärtsbewegung und ist daher nicht zu erkennen, während in Richtung zur Gebindebereitstellungsstation 7 schwenkt.

Figur 3c zeigt nun, wie Ausleger 25 die letzte Gebindelage 75 der ersten Palette 73 abhebt. In der Gebindebereitstellungsstation 7 hat der zweite Ausleger 27 inzwischen die Gebindelage 71 schon abgesetzt und bewegt sich seinerseits anschließend wieder nach oben. Der Ausleger 43 hält weiterhin die erste Palette in der Ebene B.

Figur 3d zeigt den Zustand, in dem die entleerte Palette 73 nach Drehung der Drehsäule 39 um 180° über die Palettenbereitstellungsstation gedreht wurde und abgesenkt wird. Gleichzeitig wird in der Ladestation 5 die erste Lage Gebinde 83 vom Ausleger 27 abgehoben. Andererseits hat der erste Ausleger 25 gerade die letzte Lage 75 der ersten Palette 73 auf der Gebindebereitstellungsstation 7 abgelegt, von der sie weiter transportiert wird. Der Ausleger 43 seinerseits senkt die geleerte erste Palette 73 auf die Palettenbereitstellungsstation 3 ab.

Figur 3e zeigt nun den Zustand, in dem die zweite Palette 79 weiter entleert wird. Auf Seiten der Palettenbereitstellungsstation 3 wurde die erste Palette 73 inzwischen vom Ausleger 43 abgesetzt.

Wie auch schon im erfindungsgemäßen Verfahren zum Beladen einer Palette ist auch hier der Ausleger so ausgebildet, dass er eine, zwei oder drei Gebindelagen zusammen mit einer Leerpalette tragen kann. Dadurch wird gewährleistet, dass unabhängig davon, wie lange die Bereitstellung einer neuen bepackten zweiten Palette (hier Palette 79) dauert, das Entladen der ersten Palette durch die Gebindebereitstellungsstation 7 ohne Zeitverlust weiter durchgeführt werden kann, gleichzeitig braucht der Ausleger 43 in Bezug auf seine Tragfähigkeit auch nur für eine, zwei oder drei Lagen einschließlich der Palette ausgebildet zu sein.

Wie auch schon im Zusammenhang mit dem Absenken beschrieben, kann auch das Anheben der ersten Palette, hier Palette 73, zwischen den Zuständen, die in Figur 3a und 3b gezeigt wurden, schrittweise stattfinden, nämlich dann, wenn vom Ausleger 25 oder 27 gerade eine Lage weggehoben werden kann, oder in einem Zug geschehen, nämlich wenn beim Anheben der Palette momentan weder der Ausleger 25 noch der Ausleger 27 zum Abheben einer Gebindelage bereitstehen.

Dank dem Anordnen einer bepackten Palette und einer unbepackten Palette auf zwei unterschiedlichen Ebenen, wobei insbesondere die beiden Paletten zumindest teilweise oder vollständig übereinander angeordnet sind, wird die Bereitstellung bzw. der Abtransport der bepackten Palette so vom Aufsetzen bzw. Abheben der Gebindelagen prozesstechnisch getrennt, dass das Aufsetzen bzw. Abheben selbst beim Palettenwechsel ohne Pause durchgeführt werden kann, wodurch signifikante Erhöhungen des Durchsatzes des Palettierens erzielt werden können. Mit der beschriebenen Palettiermaschine sind mit einer Taktzeit von 5-6 Sekunden Höchstleistungen von 600 bis 700 Gebindelagen pro Stunde auch bei Schrumpfgebindeverarbeitung erreichbar, trotz der bodennahen Anordnung aller Förderer und Stationen zum Transport der Paletten und Gebinde.

Die in den Figuren 2a bis 2e und 3a bis 3e beschriebene Sequenz zum Be- und Entladen einer Palette ist hier nur als beispielhaft anzusehen und die Bewegung der einzelnen Elemente zueinander kann auch variiert werden. Insbesondere werden die einzelnen Bewegungen der Ausleger 25, 27 und 43 dabei üblicherweise an die vorliegenden Gegebenheiten angepasst um einen optimalen Prozess durchführen zu können.

Sämtliche Abläufe des Palettierers 1 werden durch eine oder mehrere koordinierte Steuerungen S programmgesteuert synchronisiert ausgeführt. Es können gebindesortenabhängig mehrere Programme gespeichert sein, die nur bei Bedarf aufgerufen werden müssen. Die Steuerung S steht eingangsseitig mit einer Vielzahl von Sensoren zum Erfassen von Positionen, Drehstellungen, Geschwindigkeiten und Schutzeinrichtungen in Verbindung und liefert ausgangsseitig Signale zur Betätigung und Steuerung sämtlicher Antriebe zum Drehen oder wechselweisen Schwenken der beiden Drehsäulen, der Antriebe 31, 33 und 41 zum Heben und Senken der Ausleger 25, 27 und 43, der Aktoren zum Öffnen und Schließen, d. h. Zusammenfahren bzw. Auseinanderfahren der Rollenteppiche für die Gebindelagen und Betätigen der unterseitig angeordneten Saugnäpfe für die Handhabung von Zwischenlagen. Die Steuerung S ist darüber hinaus auch für den koordinierten Betrieb der nicht gezeigten Antriebsmotoren sämtlicher Transporteure und Förderer zuständig.

Die Transporteure 11, 13, 21 und 87 sind bevorzugt entsprechend der Darstellung in gezeigter Weise parallel und/oder rechtwinklig zueinander verlaufend ausgerichtet, können aber bedarfsweise auch in anderer Konfiguration angeordnet sein, z. B. wenn die Drehsäule 23 mit drei oder an allen vier Seiten mit vier um 90° versetzten, jeweils unabhängig voneinander höhenverfahrbaren Auslegern mit daran wechselbar befestigtem Lagengreifsystemen, insbesondere Rollenteppich- bzw. Jalousiegreifköpfen, bestückt werden soll. Dann kann es auch zweckmäßig sein, die Drehsäule 39 mit zwei Auslegern zu versehen, oder zwei Drehsäulen versetzt an der Peripherie der Drehsäule 23 für die Handhabung der Paletten vorzusehen.

## Patentansprüche

1. Verfahren zum Beladen einer Palette, mit den Schritten:
- Aufsetzen, insbesondere lagenweise, von Gebinden (55, 51), insbesondere Flaschenkästen, Einweggebinden oder dergleichen, auf eine erste Palette (53), die in einer ersten Ebene (A) angeordnet ist,
- Bereitstellen einer zweiten Palette (59) oberhalb der bepackten ersten Palette (53) in einer zweiten Ebene (B) und
- Abtransportieren der bepackten ersten Palette (53), wobei
nach dem Entfemen der bepackten ersten Palette (53), die zweite Palette (59) vollständig auf die erste Ebene (A) abgesenkt wird.

2. Verfahren nach Anspruch 1, wobei schon Gebinde (57) auf die zweite Palette (59) aufgesetzt werden, solange sich die zweite Palette (59) noch oberhalb der ersten Palette (53) befindet.

3. Verfahren nach Anspruch 2, wobei vor dem Aufsetzen einer vorbestimmten Anzahl an Lagen, insbesondere von der zweiten oder dritten oder vierten Gebindelage, auf die zweite Palette (59), diese auf die erste Ebene (A) abgesenkt wird.

4. Verfahren zum Entladen einer Palette, mit den Schritten:
- Entfernen, insbesondere lagenweise, von Gebinden, insbesondere Flaschenkästen, Einweggebinden oder dergleichen, von einer ersten Palette (73), die in einer ersten Ebene (B) angeordnet ist,
- Bereitstellen einer zweiten bepackten Palette (79) unterhalb der ersten Palette (73) in einer zweiten Ebene (A) und
- Abtransportieren der ersten Palette (73), wobei
vor dem Bereitstellen der zweiten bepackten Palette (79), die erste Palette (73) vollständig auf die erste Ebene (B) angehoben wird.

5. Verfahren nach Anspruch 4, wobei noch Gebinde von der ersten Palette (73) entfernt werden, wenn die zweite Palette (79) unterhalb der ersten Palette (73) bereitgestellt wird.

6. Verfahren nach Anspruch 5, wobei die erste Palette (73) auf die erste Ebene (B) angehoben wird, sobald nur noch eine vorbestimmte Höchstanzahl, insbesondere eine, zwei oder drei, Gebindelagen auf der ersten Palette (73) vorhanden sind.

7. Palettierer zum, insbesondere lageweisen, Aufsetzen oder Abnehmen von Gebinden, insbesondere Einweggebinden, Flaschenkästen oder dergleichen, auf eine Palette mit einer Ladestation (5), und einer Palettenbereitstellungsstation (3) **dadurch gekennzeichnet, dass** die Ladestation (5) und Palettenbereitstellungsstation (3) so ausgebildet und aufeinander abgestimmt sind, dass über einen Zeitraum in der Ladestation (5) eine vollständig bepackte erste Palette (45) in einer Ebene unterhalb einer leeren oder nur teilweise bepackten zweiten Palette (47) angeordnet ist, wobei
die Palettenbereitstellungsstation einen höhenverfahrbaren, vorzugsweise entlang einer lotrechten Führung verfahrbaren Ausleger (43) zum Transportieren einer Palette (47) von der Palettenbereitstellungsstation (3) zur Ladestation (5) oder umgekehrt aufweist.

8. Palettierer nach Anspruch 7, wobei der Ausleger (43) ferner zumindest in der horizontalen Ebene zusätzlich schwenkbar und/oder translatorisch bewegbar ausgebildet ist.

9. Palettierer nach Anspruch 7 oder 8, wobei der Ausleger (43) so dimensioniert ist, dass er höchstens eine Palette mit einer vorbestimmten Anzahl, insbesondere einer oder zwei oder drei Gebindelagen (17) tragen kann.

10. Palettierer nach einem der Ansprüche 7 bis 9, mit einer Gebindebereitstellungsstation (7) mit mindestens einem zweiten höhenverstellbaren Ausleger (25, 27) zum Bereitstellen der Gebinde (17) auf eine Palette (45) in der Ladestation (5).

## Claims

1. Method for loading a pallet, having the following steps:
- placing, in particular in layers, packages (55, 51), in particular bottle crates, disposable packages or the like, on a first pallet (53), which is arranged in a first plane (A),
- providing a second pallet (59) above the loaded first pallet (53) in a second plane (B) and
- taking the loaded first pallet (53) away, wherein
after removing the loaded first pallet (53), the second pallet (59) is completely lowered to the first plane (A).

2. Method according to claim 1, wherein packages (57) are already placed on the second pallet (59), while the second pallet (59) is still above the first pallet (53).

3. Method according to claim 2, wherein, prior to placing a pre-determined number of layers, in particular from the second or third or fourth package layer, on the second pallet (59), this is lowered down to the first plane (A).

4. Method for unloading a pallet, having the following steps:
- removing, in particular in layers, packages, in particular bottle crates, disposable packages or the like, from a first pallet (73), which is arranged in a first plane (B),
- providing a second loaded pallet (79) below the first pallet (73) in a second plane (A) and
- taking the first pallet (73) away, wherein
prior to providing the second loaded pallet (79), the first pallet (73) is completely raised to the first plane (B).

5. Method according to claim 4, wherein packages are still removed from the first pallet (73), when the second pallet (79) is provided below the first pallet (73).

6. Method according to claim 5, wherein the first pallet (73) is raised to the first plane (B), as soon as only a pre-determined maximum number, in particular one, two or three package layers, is present on the first pallet (73).

7. Palletiser for placing or removing, in particular in layers, packages, in particular disposable packages, bottle crates or the like, on a pallet with a loading station (5) and a pallet staging station (3), **characterised in that** the loading station (5) and pallet staging station (3) are designed and adapted to one another in such a way that, for a period of time a completely loaded first pallet (45) is arranged in the loading station (5) on a plane below an empty or only partially loaded second pallet (47), wherein
the pallet staging station comprises a height-adjustable arm (43), preferably movable along a perpendicular guide means for transporting a pallet (47) from the pallet staging station (3) to the loading station (5) or vice versa.

8. Palletiser according to claim 7, wherein the arm (43) is further designed such that it is also swivelable and/or translationally movable, at least in the horizontal plane.

9. Palletiser according to claim 7 or 8, wherein the arm (43) is dimensioned such that it can carry at the most one pallet with a pre-determined number, in particular one or two or three package layers (17).

10. Palletiser according to any one of claims 7 to 9, comprising a package staging station (7) having at least a second height-adjustable arm (25, 27) for providing the packages (17) on a pallet (45) in the loading station (5).

## Revendications

1. Procédé pour charger une palette, avec les étapes qui consistent :
- à poser, en particulier par couches, des emballages (55, 51), en particulier des casiers à bouteilles, des emballages perdus ou autres, sur une première palette (53) qui est disposée dans un premier plan (A),
- à préparer une deuxième palette (59) au-dessus de la première palette (53) garnie, dans un deuxième plan (B), et
- à évacuer la première palette (53) garnie,
étant précisé qu'après l'enlèvement de la première palette (53) garnie, la deuxième palette (59) est complètement abaissée sur le premier plan (A).

2. Procédé selon la revendication 1, étant précisé que des emballages (57) sont déjà posés sur la deuxième palette (59) alors que celle-ci se trouve encore au-dessus de la première palette (53).

3. Procédé selon la revendication 2, étant précisé qu'avant qu'un nombre prédéfini de couches d'emballages, en particulier la deuxième ou la troisième ou la quatrième couche d'emballages, ne soit posé sur la deuxième palette (59), celle-ci est abaissée sur le premier plan (A).

4. Procédé pour décharger une palette, avec les étapes qui consistent :
- à enlever, en particulier par couches, des emballages, en particulier des casiers à bouteilles, des emballages perdus ou autres, d'une première palette (73) qui est disposée dans un premier plan (B),
- à préparer une deuxième palette (79) garnie, au-dessous de la première palette (73), dans un deuxième plan (A), et
- à évacuer la première palette (73),
étant précisé qu'avant la préparation de la deuxième palette (79) garnie, la première palette (73) est complètement soulevée jusqu'au premier plan (B).

5. Procédé selon la revendication 4, étant précisé que des emballages sont encore enlevés de la première palette (73) alors que la deuxième palette (79) est préparée au-dessous de la première palette (73).

6. Procédé selon la revendication 5, étant précisé que la première palette (73) est soulevée jusqu'au premier plan (B) dès qu'il n'y a plus qu'un nombre maximal prédéfini de couches d'emballages, en particulier une, deux ou trois, sur la première palette (73).

7. Palettiseuse pour poser ou enlever, en particulier par couches, des emballages, en particulier des emballages perdus, des casiers à bouteilles ou autres, sur une palette, avec une station de chargement (5) et une station de préparation de palettes (3), **caractérisée en ce que** la station de chargement (5) et la station de préparation de palettes (3) sont conçues et adaptées l'une à l'autre de telle sorte que pendant un laps de temps, dans la station de chargement (5) une première palette (45) entièrement garnie soit disposée dans un plan situé au-dessous d'une deuxième palette (47) vide ou garnie en partie seulement,
étant précisé que la station de préparation de palettes comporte un bras en porte-à-faux (43) mobile en hauteur, de préférence mobile le long d'un guide vertical, pour le transport d'une palette (47) de la station de préparation de palettes (3) jusqu'à la station de chargement (5) ou inversement.

8. Palettiseuse selon la revendication 7, étant précisé que le bras en porte-à-faux (43) est par ailleurs conçu en supplément pour pouvoir pivoter et/ou être déplacé en translation au moins dans le plan horizontal.

9. Palettiseuse selon la revendication 7 ou 8, étant précisé que le bras en porte-à-faux (43) est dimensionné pour pouvoir porter au maximum une palette avec un nombre prédéfini de couches d'emballages (17), en particulier une ou deux ou trois.

10. Palettiseuse selon l'une des revendications 7 à 9, avec une station de préparation d'emballages (7) avec au moins un deuxième bras en porte-à-faux (25, 27), réglable en hauteur, pour la préparation des emballages (17) sur une palette (45) dans la station de chargement (5).
